# FASCICULE DE BREVET EUROPEEN

(11) **EP 1 665 122 B1**
(45) Date de publication et mention de la délivrance du brevet: **13.12.2006**
(21) Numéro de dépôt: 04787355.9
(22) Date de dépôt: 10.09.2004
(51) Int. Cl.: G06K 9/00, G06K 9/20, G02B 13/10

(54) **DISPOSITIF OPTIQUE DE FORMATION D'UNE IMAGE D'EMPREINTES DIGITALES**
OPTISCHE EINRICHTUNG ZUR BILDUNG EINES FINGERABDRUCKBILDES
OPTICAL DEVICE FOR FORMING A FINGERPRINT IMAGE

(30) Priorité: 12.09.2003 FR 0310744
(43) Date de publication de la demande: 07.06.2006
(73) Titulaire: SAGEM Défense Sécurité, 75015 Paris (FR)
(72) Inventeur: MORIN, Aurélie, F-95610 Eragny-sur-Oise (FR)
(74) Mandataire: Gorrée, Jean-Michel
(86) Numéro de dépôt international: PCT/FR2004/002307
(87) Numéro de publication internationale: WO 2005/027025

(56) Documents cités:
- EP-A- 0 308 162
- WO-A-96/13742
- US-A- 3 716 301
- US-A- 5 900 993
- STOLTZMANN D E ET AL: "VERSATILE ANAMORPHIC ELECTRONIC FINGERPRINTING: DESIGN AND MANUFACTURING CONSIDERATIONS" PROCEEDINGS OF THE SPIE, SPIE, BELLINGHAM, VA, US, vol. 2537, 10 juillet 1995 (1995-07-10), pages 105-116, XP000826948 ISSN: 0277-786X
- HEBERT R T: "OFF-AXIS OPTICAL ELEMENTS IN INTEGRATED, INJECTION-MOLDED ASSEMBLIES" PROCEEDINGS OF THE SPIE, SPIE, BELLINGHAM, VA, US, vol. 2600, 23 octobre 1995 (1995-10-23), pages 129-134, XP000864100 ISSN: 0277-786X
- SANG-YI YI ET AL: "A rotational robust fingerprint recognition system using Dove prisms" PROC. SPIE - INT. SOC. OPT. ENG. (USA), PROCEEDINGS OF THE SPIE - THE INTERNATIONAL SOCIETY FOR OPTICAL ENGINEERING, 1998, SPIE-INT. SOC. OPT. ENG, USA, vol. 3386, 14 avril 1998 (1998-04-14), pages 222-230, XP001193846 ISSN: 0277-786X

## Description

La présente invention concerne, d'une façon générale, le domaine du relevé d'empreintes digitales et elle concerne, plus particulièrement, des perfectionnements apportés aux dispositifs optiques de formation d'une image d'empreintes digitales selon le préambule de la revendication 1.

Il est explicitement souligné ici que l'invention se rapporte exclusivement à un dispositif optique propre à former une image d'empreintes digitales, et qu'elle ne concerne pas les matériels situés en aval dudit dispositif pour scruter/enregistrer l'image obtenue, détecter les points caractéristiques des empreintes digitales et fournir des informations sur la personne concernée.

On connaît déjà diverses réalisations de dispositifs optiques d'imagerie destinés à la formation d'une image d'empreintes digitales : voir par exemple les documents WO 96 02896, US 5 732 148, WO 97 43735, WO 97 03412.

Dans les dispositifs optiques de reconnaissance d'empreintes digitales par imagerie, il faut réaliser une image d'un doigt qui est incliné par rapport à l'axe optique. Cette inclinaison est gênante pour la mise en place des composants optiques et i1 en résulte des limitations : le plan de l'objet (doigt) ne doit pas être trop fortement incliné par rapport à l'axe optique, le système complet est encombrant et épais, l'image obtenue présente des déformations (anamorphose, distorsion), l'image présente un flou fonction du champ, l'image est inclinée, la présence de moyens d'éclairage propres à éclairer le doigt plus ou moins de face conduit à un dispositif de grande hauteur (ou épaisseur).

Le document US-A-3 716 301 décrit un dispositif optique de formation d'une image d'empreinte digitale utilisant un prisme de Dove.

Les dispositifs de détection d'empreintes digitales peuvent, notamment, servir à authentifier une personne afin que celle-ci soit autorisée à effectuer une opération déterminée : dans ce cas, le dispositif de détection d'empreintes digitales accompagne souvent un autre appareil que la personne authentifiée sera autorisée à utiliser (ordinateur, machine bancaire, ...). La place disponible pour l'implantation du dispositif de détection d'empreintes digitales est alors réduite, et a fortiori le dispositif optique d'imagerie incorporé dans ce dispositif de détection d'empreintes digitales doit être réalisé sous la forme la plus compacte possible, et notamment avec l'épaisseur (ou hauteur) la plus faible possible. Pour fixer les idées, il est requis, au moins pour certaines applications, que le dispositif optique d'imagerie présente une épaisseur (ou hauteur) n'excédant pas environ 5 mm.

Les dispositifs optiques d'imagerie actuellement connus, notamment d'après les documents précités, ne sont pas en mesure de satisfaire une telle exigence.

L'invention a pour but de proposer une solution technique originale qui permette de satisfaire les exigences de la pratique.

A cette fin, un dispositif optique de formation d'une image d'empreintes digitales, étant agencé conformément à l'invention, se caractérise par les dispositions de la partie caractérisante de la revendication 1.

Le prisme de Dove délivre une image anamorphosée et inclinée sur l'axe optique. Ces défauts sont éliminables par des moyens de correction appropriés mettant en oeuvre des moyens de correction d'anamorphose disposés en regard de la susdite face de sortie du prisme de Dove pour corriger l'anamorphose due au prisme de Dove.

Par contre, la mise en oeuvre d'un prisme de Dove permet d'éviter les inconvénients des dispositifs antérieurs et de réaliser un dispositif optique de très faible épaisseur, notamment n'excédant pas 5 mm.

Les dispositions qui viennent d'être exposées permettent de constituer un dispositif optique efficace propre à délivrer une image de bonne qualité, tandis que ses pièces composantes sont peu encombrantes, notamment en épaisseur.

Bien que les moyens de correction d'anamorphose puissent en principe être constitués de toute manière appropriée connue de l'homme du métier, une solution particulièrement intéressante en raison de sa compacité consiste en ce que lesdits moyens de correction d'anamorphose comprennent une lentille afocale cylindrique.

Pour redresser l'image inclinée fournie par le prisme de Dove, on peut faire en sorte soit que la surface convergente d'entrée soit inclinée par rapport à l'axe optique et que la surface de renvoi soit sensiblement plane, soit inversement que la surface convergente d'entrée soit sensiblement perpendiculaire à l'axe optique et que la surface de renvoi ne soit pas plane.

De façon avantageuse, la surface de renvoi à sensiblement 90° appartient à un prisme.

De façon avantageuse encore, les moyens optiques de correction comprennent un dioptre de correction de l'astigmatisme dû à la susdite lentille afocale cylindrique. Il est alors aisé de faire en sorte que le dioptre soit accolé à la face d'entrée du prisme de renvoi à sensiblement 90°.

Il est possible d'obtenir une compacité optimale en prévoyant que les moyens optiques de correction et de focalisation de l'image issue de la lentille afocale cylindrique soient constitués de façon intégrale sous forme d'une pièce optique unique moulée en un matériau transparent regroupant tous les éléments de correction et de focalisation. Dans ce cas, la fabrication par moulage en résine synthétique transparente de la pièce optique unique regroupant toutes les fonctions de correction et de focalisation en aval de la lentille afocale cylindrique est une solution particulièrement économique à tous points de vue : simplicité et rapidité de fabrication de cette pièce unique, simplicité et rapidité de montage, compacité extrême du dispositif optique qui ne comporte que trois pièces composantes (prisme de Dove, lentille afocale cylindrique et ladite pièce unique regroupant les fonctions de correction et de focalisation). La possibilité de constituer un dispositif optique compact et de très faible épaisseur (typiquement n'excédant pas 5 mm) alliée à un coût relativement modique constituent des avantages propres à satisfaire pleinement les exigences de la pratique, notamment pour une fabrication en grand nombre.

L'invention sera mieux comprise à la lecture de la description détaillée qui suit de certains modes de réalisation préférés donnés à titre purement illustratif. Dans cette description, on se réfère aux dessins annexés sur lesquels :
- la figure 1 est un schéma illustrant le but visé par l'invention ;
- la figure 2 est un schéma optique simplifié illustrant un dispositif optique perfectionné proposé conformément à l'invention pour satisfaire au but explicité à la figure 1 ;
- la figure 3 est un schéma optique simplifié illustrant un mode de réalisation préféré du dispositif optique de la figure 2 ;
- la figure 4 est un schéma optique simplifié illustrant un exemple préféré de réalisation concrète du dispositif de la figure 3 ;
- la figure 5A représente un exemple avantageux de réalisation d'une partie du dispositif de la figure 4 ; et
- la figure 5B est un exemple concret de réalisation industrielle de la partie du dispositif de la figure 4 illustrée à la figure 5.

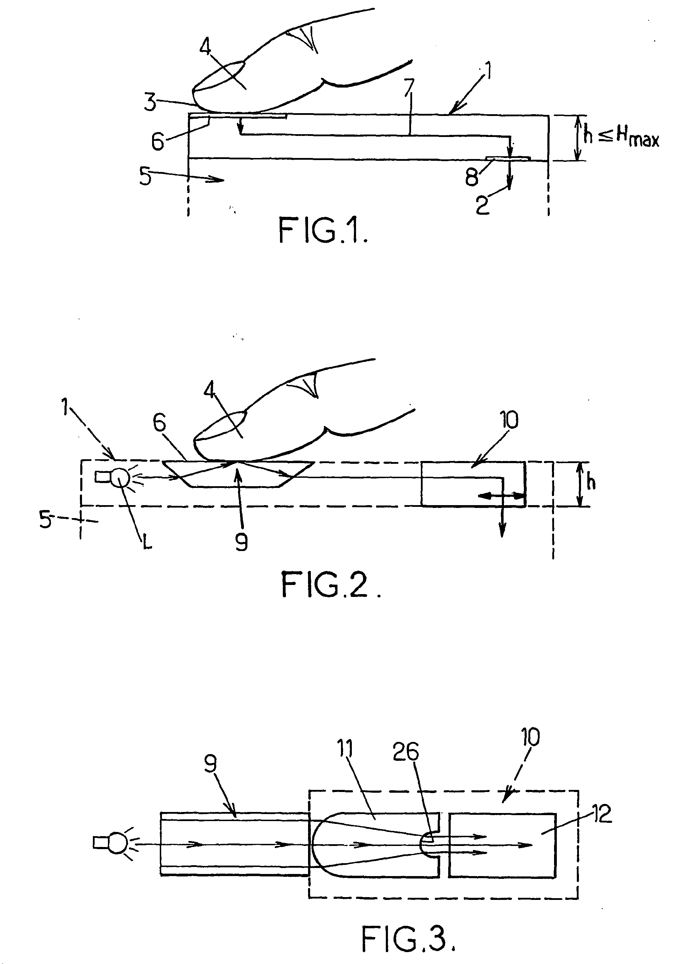

On rappelle, avec référence à la figure 1, que l'invention vise à proposer un dispositif optique 1 de formation d'une image (2, en sortie du dispositif) d'empreintes digitales 3 (par exemple les empreintes digitales 3 d'un doigt 4 d'une main), ledit dispositif optique 1 devant constituer le dispositif d'entrée d'une unité 5 (non montrée) d'analyse desdites empreintes digitales. A ce titre, le dispositif optique 1 doit être réalisé sous une forme très compacte, et notamment présenter une hauteur (ou épaisseur) h qui n'excède pas une valeur maximale Hₘₐₓ typiquement de l'ordre de 5 mm. A la figure 1, on a désigné par 6 la fenêtre optique d'entrée sur laquelle est apposé le doigt 4, par 7 le trajet optique schématique, et par 8 la fenêtre optique de sortie ; les fenêtres optiques d'entrée 6 et de sortie 8 sont disposées sur les faces principales opposées du dispositif optique 1 de manière que ledit dispositif optique 1 puisse satisfaire à l'exigence de hauteur maximale évoquée plus haut, d'une part, et de manière que le faisceau optique de sortie du dispositif optique 1, avec l'image optique 2 des empreintes digitales, pénètre directement dans l'unité 5 d'analyse.

Pour satisfaire l'exigence, très contraignante, d'une hauteur maximale aussi faible que, typiquement, 5 mm, on met en oeuvre, en tant qu'organe de capture optique d'une image des empreintes digitales, un prisme de Dove 9 dont la grande face constitue la susdite fenêtre optique d'entrée 6, sur laquelle le doigt 4 est apposé. La référence 6 est, dans ce qui suit, utilisée pour désigner la grande face du prisme de Dove 9.

Conformément au principe de fonctionnement d'un prisme de Dove, la lumière incidente issue d'une source L pénètre, selon l'axe optique parallèle à la face principale 6, par un petit côté incliné (côté d'entrée), est réfractée vers la face principale 6 où elle éclaire la surface du doigt, subit une réflexion totale sur la face principale 6 en direction du petit côté incliné (côté de sortie) opposé au petit côté incliné d'entrée où elle est réfractée pour sortir parallèlement à l'axe optique.

Il faut souligner que la réflexion totale de la lumière sur la face principale 6 du prisme de Dove 9 ne se produit que dans les zones de cette surface où aucun objet n'est à son contact extérieurement. Autrement dit, la lumière n'est réfléchie qu'en regard des parties du doigt 4 qui ne sont pas en appui sur la face 6, c'est-à-dire en regard des creux ou sillons des empreintes digitales. Autrement dit encore, l'image optique des empreintes digitales fait apparaître les creux ou sillons des empreintes en clair tandis que les parties saillantes des empreintes sont sombres.

En pratique, un prisme de Dove d'une épaisseur d'environ 4 mm convient parfaitement.

Comme on le voit parfaitement sur la représentation schématique de la figure 2, le rayon lumineux d'éclairage est très incliné par rapport à la face 6, autrement dit par rapport à la surface du doigt 4 appliqué sur celle-ci. Pour obtenir finalement une image des empreintes digitales convenablement exploitable par l'unité 5 d'analyse située en aval, il est nécessaire de corriger l'image brute issue du prisme de Dove. A cet effet, on prévoit des moyens optiques 10 disposés en regard du petit côté de sortie du prisme de Dove 9 pour corriger cette image brute.

L'inclinaison du rayonnement lumineux par rapport à la face principale 6 du prisme de Dove 9 provoque une anamorphose de l'image de sortie (image déformée selon un axe seulement). Pour restituer une image non anamorphosée, les moyens de correction 10 comprennent des moyens de compensation d'anamorphose qui pourraient être constitués de toute façon appropriée (par exemple des prismes déviateurs).

Les moyens de correction 10 comprennent en outre des moyens pour focaliser l'image corrigée dans un plan sensiblement parallèle à la susdite grande face 6 du prisme de Dove.

Pour obtenir un dispositif aussi compact que possible, il est avantageux, comme illustré à la figure 3, que ces moyens de compensation d'anamorphose soient constitués sous forme d'une lentille afocale cylindrique 11, de faible épaisseur (typiquement la même épaisseur que le prisme de Dove 9), disposée en regard du petit côté de sortie du prisme 9.

Les moyens de correction 10 peuvent alors comprendre en outre des moyens optiques 12 de correction complémentaire et de focalisation de l'image en sortie, disposés en aval de la lentille afocale 11, afin de corriger d'autres défauts de l'image et délivrer l'image de sortie dans les conditions requises.

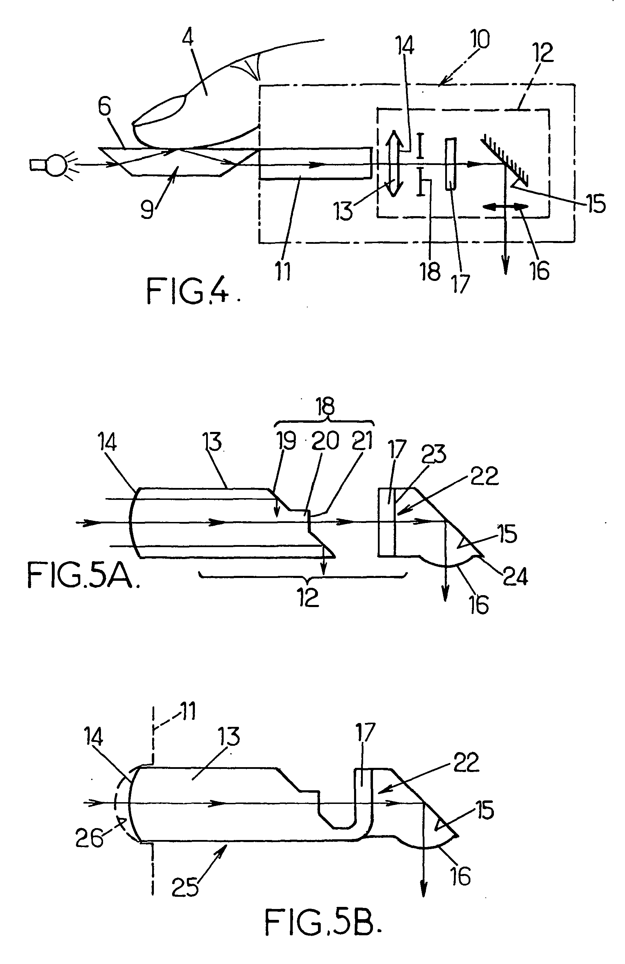

Ainsi, pour former une image corrigée dans un plan sensiblement parallèle à la face 6 du prisme de Dove, les moyens optiques de correction complémentaire comprennent, comme illustré schématiquement à la figure 4 :
- une lentille épaisse 13 à surface convergente d'entrée 14, disposée à la suite de la susdite lentille afocale cylindrique 11 ;
- une surface 15 de renvoi à sensiblement 90° ;
- une lentille convergente de sortie 16.

En outre, les moyens optiques 12 de correction complémentaire comprennent de préférence un dioptre 17 de correction de l'astigmatisme dû à la susdite lentille afocale cylindrique 11.

De plus, il est souhaitable de prévoir un diaphragme 18 propre à ne transmettre que la partie centrale du faisceau lumineux issu de la lentille épaisse 13.

Enfin, toujours en raison de l'inclinaison du rayonnement lumineux par rapport à la face principale 6 du prisme de Dove 9, autrement dit par rapport à la surface du doigt 4 apposée sur celle-ci, l'image des empreintes qui est obtenue est inclinée par rapport à l'axe optique, et il convient de la redresser. Dans la configuration du schéma optique simplifié de la figure 4 (et des figures suivantes 5A, 5B), ce redressement de l'image est obtenu en inclinant, par rapport à l'axe optique, la surface convergente d'entrée 14 de la lentille épaisse 13, la surface de renvoi 15 restant, quant à elle, plane. Une solution alternative peut consister en ce que la lentille épaisse 13 présente une surface convergente d'entrée 14 sensiblement perpendiculaire à l'axe optique et à agencer la surface de renvoi 15 sous forme d'une surface non plane dont la courbure est déterminée pour obtenir le redressement recherché de l'image.

Dans un exemple de réalisation intéressant, les composants optiques peuvent être structurellement regroupés, dans les limites de leur compatibilité, comme illustré à la figure 5A.

Ainsi, le diaphragme 18 peut être structurellement associé avec la lentille épaisse 13. A cette fin, l'extrémité de sortie de la lentille épaisse 13 peut être constituée sous forme d'une face plane 19 inclinée par rapport à l'axe optique sous un angle tel (par exemple 45°) que les rayons lumineux sont réfléchis transversalement à l'axe optique (autrement dit les rayons restent piégés dans la lentille épaisse), à l'exception de la portion centrale de cette face 19 qui est conformée sous forme d'une excroissance 20 à face de sortie 21 sensiblement perpendiculaire à l'axe optique qui, seule, laisse passer les rayonnements lumineux.

De même, toujours comme illustré à la figure 5A, il est possible de combiner structurellement le dioptre 17, la surface de renvoi 15 et la lentille convergente de sortie 16. A cet effet, la surface de renvoi 15 appartient à un prisme 22 contre la face d'entrée 23 duquel est accolé le dioptre 17 et dont la face de sortie 24 présente une saillie en calotte sphérique formant ladite lentille convergente de sortie 16.

Dans ces conditions, il est facile de réunir les deux éléments composants apparaissant à la figure 5A sous forme d'une pièce unique 25 qui regroupe tous les composants optiques de correction (à l'exception de la lentille afocale cylindrique 11), de renvoi et de focalisation. Une telle pièce unique peut être aisément fabriquée de façon simple et économique par moulage d'une résine transparente.

On aboutit ainsi à un dispositif optique 1 de structure simplifiée, ne comportant que trois composants (prisme de Dove, lentille afocale cylindrique, élément correcteur/focaliseur) dont l'assemblage est simple. La pièce 25 est de petite dimension transversale et son extrémité antérieure, comportant la face convergente d'entrée 14, est dimensionnée et conformée pour s'emboîter dans la face cylindrique concave 26 de sortie de la lentille afocale cylindrique 11, comme illustré schématiquement à la figure 5B.

Finalement, grâce à la forte inclinaison de la surface du doigt par rapport à l'axe optique (qui peut être supérieure à 78°) et à la mise en oeuvre de moyens appropriés, on est en mesure de constituer un dispositif compact et peu épais (épaisseur inférieure à 5 mm), capable de procurer une image plane, nette et comportant peu de distorsion, et constitué d'un petit nombre de pièces de petites dimensions et peu coûteuses à fabriquer. Enfin, du fait que le doigt doit être apposé sur une surface plane, le dispositif est compatible avec les technologies de reconnaissance de faux doigt.

## Revendications

1. Dispositif optique (1) de formation d'une image d'empreintes digitales, comprenant
- un prisme de Dove (9) dont la grande face (6) constitue la surface d'apposition d'un doigt (4) dont on souhaite obtenir une image des empreintes digitales (3),
- une source de lumière (L) disposée en regard d'une face latérale (face d'entrée) du prisme de Dove, et
- des moyens optiques de correction (10) disposés en regard d'une face latérale opposée (face de sortie) pour corriger l'image issue du prisme de Dove, lesdits moyens optiques de correction (10) comprenant :
. des moyens de correction d'anamorphose disposés en regard de la susdite face de sortie du prisme de Dove (9) pour corriger l'anamorphose due au prisme de Dove,
. des moyens de focalisation pour focaliser ladite image corrigée dans un plan sensiblement parallèle à la susdite grande face (6) du prisme de Dove, ces moyens de focalisation comprenant une lentille épaisse (13) à surface convergente d'entrée (14) disposée à la suite des susdits moyens de correction d'anamorphose, une surface (15) de renvoi à sensiblement 90°, et une lentille convergente de sortie (16), et
. un diaphragme (18) propre à ne transmettre que la partie centrale du faisceau optique issu de la susdite lentille épaisse (13),
**caractérisé en ce que**, pour constituer le susdit diaphragme (18), la lentille épaisse (13) comporte une face de sortie (19) inclinée propre à dévier la partie périphérique du faisceau, avec une zone centrale (20) à face de sortie (21) sensiblement perpendiculaire à l'axe optique propre à laisser passer la partie centrale du faisceau sans déviation.

2. Dispositif optique selon la revendication 1, **caractérisé en ce que** les moyens de correction d'anamorphose comprennent une lentille afocale cylindrique (11) .

3. Dispositif optique selon la revendication 1 ou 2, **caractérisé en ce que**, pour redresser l'image inclinée fournie par le prisme de Dove (9), la surface convergente d'entrée (14) est inclinée par rapport à l'axe optique et la surface de renvoi (15) est sensiblement plane.

4. Dispositif optique selon l'une quelconque des revendications 1 à 3, **caractérisé en ce que**, pour redresser l'image inclinée fournie par le prisme de Dove (9), la surface convergente d'entrée (14) est sensiblement perpendiculaire à l'axe optique et la surface de renvoi (15) n'est pas plane.

5. Dispositif optique selon l'une quelconque des revendications 1 à 5, **caractérisé en ce que** la surface (15) de renvoi à sensiblement 90° appartient à un prisme (22).

6. Dispositif optique selon l'une quelconque des revendications 2 à 5, **caractérisé en ce que** les moyens optiques de correction (10) comprennent un dioptre (17) de correction de l'astigmatisme dû à la susdite lentille afocale cylindrique (11).

7. Dispositif optique selon les revendications 5 et 6, **caractérisé en ce que** le dioptre (17) est accolé à la face d'entrée (23) du prisme (22) de renvoi à sensiblement 90°.

8. Dispositif optique selon l'ensemble des revendications 1 à 7, **caractérisé en ce que** les moyens optiques (12) de correction et de focalisation de l'image issue de la lentille afocale cylindrique (11) sont constitués de façon intégrale sous forme d'une pièce optique unique (25) moulée en un matériau transparent regroupant tous les éléments de correction et de focalisation.

## Claims

1. Optical device (1) for forming a fingerprint image, comprising
- a Dove prism (9), of which the large face (6) constitutes the placing surface for a finger (4) of which a fingerprint image (3) is to be obtained,
- a light source (L) arranged facing a lateral face (input face) of the Dove prism, and
- optical correction means (10) arranged facing an opposing lateral face (output face) for correcting the image from the Dove prism, said optical correction means (10) comprising:
. anamorphosis correction means arranged facing said output face of the Dove prism (9) for correcting the anamorphosis due to the Dove prism,
. focusing means for focusing said corrected image in a plane substantially parallel to said large face (6) of the Dove prism, said focusing means comprising a thick lens (13) with a convergent input surface (14) arranged following said anamorphosis correction means, a surface for deflection through essentially 90°, and a convergent output lens (16), and
. a diaphragm (18) which is able to only transmit the central part of the optical bundle coming from said thick lens (13),
**characterised in that**, in order to constitute said diaphragm (18), the thick lens (13) comprises an inclined output face (19) which is able to deflect the peripheral part of the bundle, with a central zone (20) with an output face (21) which is substantially perpendicular to the optical axis which can allow the central part of the bundle to pass without deflection.

2. Optical device according to claim 1, **characterised in that** the anamorphosis correction means comprise a cylindrical afocal lens (11).

3. Optical device according to claim 1 or 2, **characterised in that**, in order to invert the inclined image supplied by the Dove prism (9), the convergent input surface (14) is inclined with respect to the optical axis and the deflection surface (15) is substantially planar.

4. Optical device according to one of the claims 1 to 3, **characterised in that**, in order to invert the inclined image supplied by the Dove prism (9), the convergent input surface (14) is substantially perpendicular to the optical axis and the deflection surface (15) is not planar.

5. Optical device according to any one of the claims 1 to 5, **characterised in that** the surface for deflection through essentially 90° belongs to a prism (22).

6. Optical device according to any one of the claims 2 to 5, **characterised in that** the optical correction means (10) comprise a dioptre (17) for correction of the astigmatism due to said cylindrical afocal lens (11).

7. Optical device according to claims 5 and 6, **characterised in that** the dioptre (17) is joined to the input face (23) of the prism (22) with deflection through essentially 90°.

8. Optical device according to all the claims 1 to 7, **characterised in that** the optical means (12) of correction and focusing of the image coming from the cylindrical afocal lens (11) are constituted integrally in the form of a single optical element (25) moulded from a transparent material bringing together all the correction and focusing elements.

## Patentansprüche

1. Optische Vorrichtung (1) zur Bildung eines Fingerabdruckbildes, umfassend
- ein Dove-Prisma, dessen große Fläche (6) die Auflagefläche für einen Finger (4) bildet, von dem man ein Fingerabdruckbild (3) erhalten möchte,
- eine Lichtquelle (L), die gegenüber einer Seitenfläche (Einfallfläche) des Dove-Prismas angeordnet ist, und
- optische Korrekturmittel (10), die einer gegenüberliegenden Seitenfläche (Austrittsfläche) gegenüberstehend angeordnet sind, zur Korrektur eines Bildes aus dem Dove-Prisma, wobei die optischen Korrekturmittel (10) umfassen:
- anamorphotische Korrekturmittel, die der Austrittsfläche des Dove-Prismas (9) gegenüberstehend angeordnet sind, um die vom Dove-Prisma erzeugte Anamorphosis zu korrigieren,
- Fokussierungsmittel zur Fokussierung des korrigierten Bildes in einer Ebene, die zur großen Fläche (6) des Dove-Prismas im Wesentlichen parallel ist, wobei diese Fokussierungsmittel eine dicke Linse (13) mit konvergierender Einfallfläche (14) umfassen, die auf die anamorphotischen Korrekturmittel folgend angeordnet ist, eine Reflexionsoberfläche (15) vom im Wesentlichen 90° und eine konvergierende Austrittslinse (16), und
- ein Diaphragma (18), das geeignet ist, nur den mittleren Teil des optischen Strahls, der von der dicken Linse aus geschickt wird, zu übertragen,
**dadurch gekennzeichnet,**
**dass** die dicke Linse (13) zur Bildung des Diaphragmas (18) eine geneigte Austrittsfläche (19) umfasst, die geeignet ist, den periphärischen Teil des Strahls abzulenken, mit einem zentralen Bereich (20) mit einer Austrittsfläche (21), die im Wesentlichen zur optischen Achse orthogonal ist, und welcher zentrale Bereich geeignet ist, den zentralen Teil des Strahls ohne Ablenkung durchzulassen.

2. Optische Vorrichtung nach Anspruch 1,
**dadurch gekennzeichnet,**
**dass** die anamorphotischen Korrekturmittel eine afokale zylindrische Linse (11) umfassen.

3. Optische Vorrichtung nach Anspruch 1 oder 2,
**dadurch gekennzeichnet,**
**dass** die konvergierende Einfallfläche (14) bezüglich der optischen Achse geneigt ist, und dass die Reflexionsfläche (15) im Wesentlichen eben ist, um das vom Dove-Prisma (9) gelieferte geneigte Bild aufzurichten.

4. Optische Vorrichtung nach einem der Ansprüche 1 bis 3,
**dadurch gekennzeichnet,**
**dass** die konvergierende Einfallfläche (14) zur optischen Achse im Wesentlichen orthogonal ist und dass die Reflexionsfläche (15) nicht eben ist, um das vom Dove-Prisma gelieferte Bild aufzurichten.

5. Optische Vorrichtung nach einem der Ansprüche 1 bis 4,
**dadurch gekennzeichnet,**
**dass** die Reflexionsfläche (15) mit im Wesentlichen 90° zu einem Prisma (22) gehört.

6. Optische Vorrichtung nach einem der Ansprüche 2 bis 5,
**dadurch gekennzeichnet,**
**dass** die optischen Korrekturmittel (10) ein Diopter (17) zur Korrektur des von der afokalen zylindrischen Linse (11) herrührenden Astigmatismus umfassen.

7. Optische Vorrichtung nach den Ansprüchen 5 und 6,
**dadurch gekennzeichnet,**
**dass** das Diopter (17) mit im Wesentlichen 90° an die Einfallfläche (23) des Reflexionsprismas (22) angefügt ist.

8. Optische Vorrichtung nach den vorhergehenden Ansprüchen 1 bis 7,
**dadurch gekennzeichnet,**
**dass** die optischen Korrekturmittel (12) und die Mittel zur Fokussierung des Bildes aus der afokalen zylindrischen Linse (11) auf integrale Weise in Form eines einzigen optischen Teils (25) gebildet sind, das aus einem transparenten Material gegossen ist, das alle Korrektur- und Fokussierungselemente umfasst.
